# EUROPEAN PATENT SPECIFICATION

(11) **EP 3 882 019 B1**
(45) Date of publication and mention of the grant of the patent: **21.10.2026**
(21) Application number: 19884175.1
(22) Date of filing: 08.11.2019
(51) Int. Cl.: B32B 15/08, B32B 27/26, B32B 27/36, B65D 1/00, B65D 1/12, C09D 5/02, C09D 167/00, C09D 167/07

(54) **COATED METAL PLATE AND DRAWN-AND-IRONED CAN**
BESCHICHTETE METALLPLATTE UND ABGESTRECKTE DOSE
PLAQUE DE MÉTAL REVÊTUE, ET BOÎTE EMBOUTIE ET ÉTIRÉE

(30) Priority: 13.11.2018 JP 2018213328; 13.11.2018 JP 2018213330
(43) Date of publication of application: 22.09.2021
(73) Proprietor: Toyo Seikan Group Holdings, Ltd., Shinagawa-ku Tokyo 141-8627 (JP)
(72) Inventor: KASHIWAKURA, Takuya, Yokohama-shi, Kanagawa 240-0062 (JP); YAMAMOTO, Hiromi, Yokohama-shi, Kanagawa 240-0062 (JP); SAKURAGI, Arata, Yokohama-shi, Kanagawa 240-0062 (JP); ZHANG, Nan, Yokohama-shi, Kanagawa 240-0062 (JP)
(74) Representative: J A Kemp LLP
(86) International application number: PCT/JP2019/044006
(87) International publication number: WO 2020/100774

(56) References cited:
- EP-A1- 3 012 100
- EP-A1- 3 192 843
- EP-A1- 3 623 435
- WO-A1-2018/207891
- JP-A- 2003 026 992
- JP-A- 2011 088 083
- JP-A- 2014 514 370
- JP-A- 2018 516 163

## Description

### Technical Field:

The present invention relates to a drawn-ironed can formed of a coated metal sheet. The coated metal sheet has excellent can-making workability to effectively prevent metal exposure even when being subjected to severe working such as drawing and ironing. Further, the coated metal sheet has excellent resistance against coating delamination, whereby delamination or peeling of the coating during a heat treatment conducted after formation can be prevented.

### Background Art:

An organic resin-coated metal sheet, which is prepared by coating a metal sheet like an aluminum sheet with a thermoplastic resin film, has been known as a can material. It has been also known that this organic resin-coated metal sheet is drawn or drawn-ironed to make a seamless can to be filled with beverage or the like. Alternatively for instance, the sheet is pressed to make an easy-open-end type can lid. For instance, an organic resin-coated metal sheet has an organic resin coating layer of a thermoplastic resin film formed of a polyester resin based on an ethylene terephthalate unit. This sheet is used as a material for seamless can formed by drawing and ironing (e.g., Patent Document 1). The organic resin-coated metal sheet can be drawn and ironed under dry conditions without using a liquid coolant. Therefore, it has an advantage of remarkably reducing load on atmosphere in comparison with a case of drawing-ironing a metal sheet without an organic resin coating by use of a massive amount of liquid coolant.

The organic resin-coated metal sheet can be produced by a film lamination method, for instance, thermally bonding a pre-formed film of a thermoplastic polyester resin or the like to a metal sheet; bonding a molten thin film of an extruded thermoplastic polyester resin or the like to a metal sheet, namely, an extrusion-lamination.

However, since the film lamination method cannot be suitably applied to formation of a thin film, the film produced by this method tends to be thick to cause disadvantages from an economic viewpoint.

There has been a proposal of replacing the organic resin-coated metal sheet produced by the film lamination method to a coated metal sheet prepared by forming a coating on a metal sheet by a method that allows formation of a thin film. According to the proposal, a drawn-ironed can is produced from the coated metal sheet under dry conditions.

For instance, Patent Document 2 proposes a coated metal plate for a drawn-ironed can. The plate is a double coated metal plate that includes a film serving as the inner side of the can after working which has a dry coating amount in a range of 90 to 400 mg/100 cm², a glass transition temperature in a range of 50 to 120°C, and also a pencil hardness of ≥H, an elongation percentage in a range of 200 to 600%, and a coefficient of kinetic friction in a range of 0.03 to 0.25 under test conditions at 60°C, and a film serving as the outer side of the can after working which has a dry coating amount in a range of 15 to 150 mg/100 cm², a glass transition temperature in a range of 50 to 120°C, and also a pencil hardness of ≥H under the test conditions at 60°C.

Patent Document 3 relates to a polyester-based aqueous coating composition which is suitably applicable to metal covers or metal containers for beverage cans and the like. This polyester-based aqueous coating composition is configured to contain a polyester resin which has an acid value of 5 mgKOH/g or more but less than 30 mgKOH/g and a curing agent which has a functional group that is reactive with a carboxyl group of the polyester resin. Consequently, this polyester-based aqueous coating composition is able to form a coating film that has excellent processability, curability and corrosion resistance.

Patent document 4 relates to a metal substrate being coated on at least a portion thereof with a liquid coating composition comprising a powder component dispersed in a liquid carrier, wherein the average particle size of the powder dispersed in the liquid carrier is less than 15 microns (µm) and wherein the coating composition is substantially free of bisphenol A (BPA), bisphenol F (BPF), bisphenol A diglycidyl ether (BADGE) and bisphenol F diglycidyl ether (BFDGE).

### Prior Art Documents:

### Patent Documents:

| | |
|---|---|
| Patent Document 1: | JP-A-2001-246695 |
| Patent Document 2: | JP 3872998 |
| Patent Document 3: | WO 2018/207891 |
| Patent Document 4: | EP 3192843 |

### Summary of the Invention:

### Problems to be solved by the invention:

Patent Document 2 employs a coating composition containing a polyester resin and a resol-type phenol resin as coating compositions for the inner surface of the can and a polyester resin and an amino resin and/or a resol-type phenol resin as coating compositions for the outer surface of the can. In coatings formed from the coating compositions, hard and brittle domains derived from a self-condensation of the phenol resin or the amino resin may be formed in the coating, so that the domains may cause a decrease in workability of the coating, and it may cause problems in terms of can-making workability. In a case of using the resol-type phenol resin, a coating to be formed may have a yellowish color peculiar to the phenol resin, and this may cause problems in the color tone depending on the application to the outer surface, for instance.

A drawn-ironed can formed of a coated metal sheet may be heat treated after formation in order to eliminate the residual strain of the coating caused by the working or to dry and cure the ink or varnish in a case of printing on the outer surface of the can. In such a case, the internal stress (residual stress) on the coating, which is caused by the severe working, is relieved. As a result, delamination of the coating from the metal substrate may occur particularly at a site of the can body side wall that is worked severely to decrease its thickness.

Accordingly, an object of the present invention is to provide a drawn-ironed can formed of a coated metal sheet having excellent can-making workability. The sheet can be subjected to severe working such as drawing and ironing under dry conditions without causing the aforementioned problems. The coated metal sheet has also excellent resistance against delamination of the coating so that it can prevent delamination of the coating even in a case of heating after can formation and also has excellent productivity.

### Means for Solving the Problems:

The present invention provides a drawn-ironed can comprising a coated metal sheet having a coating on at least one surface of a metal sheet, wherein the coating contains a polyester resin as a main component and a β-hydroxyalkylamide compound as a curing agent, and the coating has an elongation, determined in accordance with the method in the description, of not less than 200% under test conditions of 90°C, further wherein the can has the coating on the inner surface and/or the outer surface at the can bottom portion, and the coating has a MEK extraction rate, determined in accordance with the method in the description, of not more than 50%.

Furthermore, the present invention provides a method for producing a drawn-ironed can. The method comprises: drawing and ironing a coated metal sheet to form a drawn-ironed can, wherein the coated metal sheet is a coated metal sheet having a coating on at least one surface of a metal sheet, wherein the coating contains a polyester resin as a main component and a β-hydroxyalkylamide compound as a curing agent, and the coating has an elongation, determined in accordance with the method in the description, of not less than 200% under test conditions of 90°C; and heating the drawn-ironed can to set the MEK extraction rate of the coating, determined in accordance with the method in the description, to be less than 14%.

It is suitable in the method for producing a drawn-ironed can of the present invention that the heating is conducted under conditions of 150 to 250°C and 20 to 180 seconds.

### Effect of the Invention:

In light of the aforementioned circumstances, the present inventors diligently studied the coated metal sheets suitable to the purpose and found a solution to the problems. That is, it is possible to solve the problem by using a coated metal sheet formed with a coating that contains a specific polyester resin and a β-hydroxyalkylamide compound as a curing agent so that the curing is appropriately controlled. More specifically, the coated metal sheet used for producing the drawn-ironed can of the present invention has excellent coating elongability and workability. Therefore, even when being subjected to severe working such as drawing or ironing under dry conditions, ruptures on the can body side wall (this rupture may be called "body rupture" in the present invention) can be prevented, and even metal exposure can be prevented effectively, and thus, the sheet can have excellent can-making workability. In addition to that, the coating is colorless and transparent, and thus, no problem may arise in the color tone. Furthermore, as described below, since the coating has sufficient heat resistance, even in a case of forming the drawn-ironed can consecutively at a high speed, defects such as buckling or body rupture may not occur, namely, the excellent productivity can be achieved. Further, the internal stress generated by the working can be reduced by controlling the curing degree of the coating. As a result, delamination of the coating can be prevented even in a case of applying heat after can formation. Therefore, the coated metal sheet can be suitably used for making a drawn-ironed can.

The drawn-ironed can of the present invention, formed of the coated metal sheet, has excellent corrosion resistance because metal exposure on the inner surface is prevented.

### Mode for Carrying Out the Invention:

### (Coated metal sheet)

The coated metal sheet for use in producing the drawn-ironed can of the present invention has a coating formed on at least one surface of a metal sheet, and the coating contains a polyester resin as a main component and a β-hydroxyalkylamide compound as a curing agent (crosslinking agent). An important characteristic thereof is that the coating has elongation of not less than 200% under test conditions of 90°C.

When the coated metal sheet is used for forming a drawn-ironed can under dry conditions, the coated metal sheet is subjected to severe working and deformation accompanied by a temperature rise due to the heat for formation. In this case, if the coating on the coated metal sheet lacks sufficient elongation or workability in a high temperature range, it cannot adapt to the working of the metal substrate, and metal exposure and body rupture may occur. Particularly in a case of forming the drawn-ironed can consecutively at a high speed, the temperature rises considerably. In such a case, a coating that does not have sufficient heat resistance may be softened to stick to a mold. Particularly on the can inner surface, the can body may stick to a shaping punch at the time of pulling the can body out from the shaping punch after the formation by drawing-ironing, thereby hindering separation between the shaping punch and the can body. This phenomenon is called stripping failure, and it may cause buckling or body rupture of the can body, resulting in degradation in productivity. On the outer surface of the can, softening of the coating may degrade the flaw resistance, and this may cause appearance defects such as coating scraping.

When the coating has a high curing degree, namely, when the base resin like a polyester resin is highly crosslinked by the crosslinking agent, the internal stress generated by the working may be particularly increased. When the sheet in this state is subjected to heat treatment to a temperature higher than the glass transition temperature of the base resin (approximately 200°C) during a step of drying the outer surface print or the like, shrinkage stress may be applied to the interface between the coating and the substrate as the internal stress is relieved, thereby causing delamination of the coating.

Taking these factors into consideration, the coating to be formed on the metal sheet is required to have elongation and workability in a high temperature range (can-making workability), heat resistance for preventing the coating from sticking to the mold, and resistance against coating delamination for preventing the coating from delamination during a heat treatment after can body formation.

In contrast, the coated metal sheet for use in producing the drawn-ironed can of the present invention exhibits sufficient elongation and workability in a high temperature range since it has a coating containing a polyester resin as a main component and a β-hydroxyalkylamide compound as a curing agent, so that the sheet has excellent can-making workability. During drawing and ironing, metal exposure may be prevented effectively. Further, the coating exhibits a sufficient heat resistance. Therefore, in formation by drawing and ironing consecutively at a high speed, the coating rarely sticks to the mold, and this results in excellent productivity. Further, since the curing degree of the coating is controlled, the crosslinking of the polyester resin is appropriately controlled/decreased to reduce the internal stress generated by the working. Thereby, even in a case of heat treatment after formation, delamination of the coating can be prevented or reduced efficiently.

As mentioned above, it is important for the coated metal sheet for use in producing the drawn-ironed can of the present invention to be provided with a coating having high elongation and workability. In the present invention, it is important that the elongation of the coating under the test conditions of 90°C is not less than 200%, preferably not less than 250%, more preferably in the range of 300 to 500%, and even more preferably 320 to 460%. That is, when the elongation of the coating under the test conditions of 90°C is less than 200%, the can-making workability may be poor. In this case, metal exposure is likely to occur during formation. As a result, the corrosion resistance of the can inner surface may deteriorate. On the outer surface, the metal substrate may be exposed to be brought into contact with the mold. This may cause adhesion and degrade the productivity.

Further, as described above, the MEK extraction rate serving as a standard of the curing degree of the coating is not more than 50%. When the MEK extraction rate is greater than 50%, the curability of the coating is low and a large amount of uncrosslinked polyester resin will be present in the coating, and thus, the heat resistance of the coating may deteriorate. As described above, in a case of forming the drawn-ironed cans consecutively at a high speed, the coating may easily stick to the mold, thereby lowering the productivity. On the can outer surface, appearance defects such as coating scraping may occur. Further, since the amount of uncrosslinked component may be increased, the barrier properties of the coating may be lowered to degrade the corrosion resistance and resistance against retort whitening.

It is preferable in the coated metal sheet for use in producing the drawn-ironed can of the present invention that the MEK extraction rate of the coating is in the range of 14 to 50%, more preferably 14 to 40%, still more preferably 16 to 35%, and particularly preferably 16 to 30%. By setting the MEK extraction rate within this range, the curing degree of the coating can be controlled, which makes it possible to reduce the internal stress generated by the working, so that the delamination of the coating during heat treatment can be prevented or reduced. When the MEK extraction rate is lower than the range, the curing degree of the coating is high, and it increases the internal stress generated by the working. As a result, delamination of the coating may occur during the heat treatment conducted after the formation of the drawn-ironed can.

In the coated metal sheet for use in producing the drawn-ironed can of the present invention, it is preferable that the glass transition temperature (Tg) of the coating is in the range of 20 to 120°C, preferably 25 to 90°C, more preferably 35 to 85°C, and still more preferably 40 to 80°C. If Tg is higher than this range, workability and elongation may deteriorate, which may cause the metal exposure after the formation, thereby degrading the can-making workability. Further, since the internal stress after the working tends to increase, the coating delamination is likely to occur during heat treatment after the can body formation. On the other hand, when Tg is lower than this range, the internal stress after the working tends to be reduced, and the coating is less likely to be delaminated during the heat treatment. In this case, however, the coating tends to be softened and stick to the mold when drawing-ironing is conducted consecutively at the high speed. This is considered to degrade the productivity due to failure in release properties (stripping property) of the shaping punch. In addition, the barrier properties of the coating may deteriorate and this may degrade the corrosion resistance. As for the inner surface of the can, the (aromatic) flavor of the content may be adsorbed easily, namely, the resistance against flavor sorption may be inferior. As for the outer surface of the can, appearance defects such as coating scraping may occur.

The coating has a thickness of less than 30 µm, preferably more than 2 µm and less than 20 µm, more preferably more than 3 µm and less than 15 µm, and still more preferably in the range of 4 to 14 µm in terms of dry film thickness. When the thickness is less than this range, the metal exposure is likely to occur during formation, which may result in inferior can-making workability. When the thickness exceeds the range, further improvement in properties cannot be expected, and the economic efficiency may deteriorate.

### (Polyester resin)

A polyester resin is used as a base resin (main component) to constitute a coating on the coated metal sheet for use in producing the drawn-ironed can of the present invention. Here, a base resin indicates a component assumed to have the highest content (mass ratio) among the components constituting the coating. A preferred polyester resin has the glass transition temperature (Tg) in the range of 20 to 120°C, preferably 25 to 90°C, more preferably 35 to 85°C, and still more preferably 40 to 80°C. When the Tg is higher than this range, the coating to be formed may be hard, and the elongation of the coating becomes insufficient, so that the can-making workability becomes inferior. Further, since the internal stress at the time of working tends to increase, the coating delamination during heat treatment after can body formation may easily occur. On the other hand, when Tg is lower than the range, the barrier properties of the coating to be formed may deteriorate, and as a result, corrosion resistance and retort resistance may deteriorate.

In the present invention, two or more kinds of polyester resins different from each other in Tg can be blended to be used. In comparison with a case of using a single kind of polyester resin, a blend of polyester resins different from each other in Tg may form a coating with superior impact resistance, and the coating may have less coating defects even when applied with external impact.

In that case, Tgₘᵢₓ of the polyester resin blend calculated by the following Equation (1) may be within the aforementioned Tg range. $\begin{matrix}1 / {Tg}_{mix} = \left(W1/Tg1\right) + \left(W2/Tg2\right) + … + \left(Wm/Tgm\right) \\ W 1 + W 2 + … + Wm = 1\end{matrix}$ (1)

In the Equation, Tgₘᵢₓ represents the glass transition temperature (K) of the polyester resin blend, and Tg1, Tg2..., Tgm represent the glass transition temperatures (K) of the respective polyester resins to be used (polyester resin 1, polyester resin 2,..., polyester resin m). Further, W1, W2..., Wm represent the mass fractions of the respective polyester resins (polyester resin 1, polyester resin 2..., polyester resin m).

The polyester resin used preferably in particular in the coated metal sheet for use in producing the drawn-ironed can of the present invention is a mixture of a polyester resin (A) having Tg in the range of 35°C to 100°C and a polyester resin (B) having Tg in the range of -30°C to 25°C from the viewpoint of impact resistance of the coating. In this case, it is preferable that the blend ratio is (A): (B) = 98:2 to 10:90, particularly 95:5 to 30:70, in terms of mass ratio. Further, it is preferable that the glass transition temperature (Tgₘᵢₓ) calculated by the Equation (1) is 35°C or higher, from the viewpoint of corrosion resistance and retort resistance.

The polyester resin has an acid value higher than 5 mgKOH/g and lower than 50 mgKOH/g, preferably in the range of 10 to 40 mgKOH/g, further preferably not higher than 10 mgKOH/g and lower than 30 mgKOH/g, and particularly preferably not lower than 15 mgKOH/g and lower than 30 mgKOH/g.

In other words, when the polyester resin serving as a base resin has an appropriate carboxyl group amount (acid value), the resin can be imparted with both curability and workability. And a coating formed from the resin can have adhesiveness. When the acid value is smaller than the range, the number of carboxyl groups serving as the points for crosslinking with the curing agent is small, and thus, sufficient curability is unlikely to be achieved. Furthermore, the coating may have inferior adhesiveness due to the decreased amount of carboxyl groups that contribute to adhesiveness between the coating and the metal substrate. When the acid value exceeds the range, the number of the points for crosslinking with the curing agent is increased, and thus, the curability can be improved. However, the crosslinking density tends to be excessively high, so that the can-making workability may deteriorate.

Even when the acid value is larger than the range, the crosslinking density can be controlled or decreased by any adjustment such as reducing the blend amount of the curing agent. In such a case, however, free carboxyl groups that are not used for the crosslinking may remain in the coating. The coating will be inferior in waterproofness and as a result, sufficient corrosion resistance cannot be achieved.

Alternatively in the present invention, it is possible to employ a polyester resin as a mixture of two or more kinds of polyester resins each having the acid value within the aforementioned range. In this case, the sum of the values obtained by multiplying the acid value of each polyester resin by the mass fraction is defined as the average acid value (Avₘᵢₓ) of the mixed polyester resin.

A blend of a polyester resin having an acid value within the aforementioned range and a polyester resin having an acid value outside the range may be employed. In this case, it is preferable that the content of the polyester resin having an acid value within the range is not less than 30% by mass, more preferably not less than 40% by mass, and still more preferably more than 50% by mass relative to the total amount of the polyester resin (total mass of the polyester resin) in the coating.

A low-acid value polyester resin having an acid value of less than 5 mgKOH/g may also be blended in use. In this case, the content of the low-acid value polyester resin is less than 60% by mass, preferably less than 50% by mass, and more preferably less than 40% by mass, relative to the total amount of the polyester resin (total mass of the polyester resin). The low-acid value polyester resin has an extremely small amount of carboxyl groups that serve as points for reaction with the curing agent, and thus, the low-acid value polyester resin itself is hardly incorporated into the crosslinked structure. As a result, there is a high possibility that the low-acid value polyester resin keeps its uncrosslinked state and remains in the coating even after baking. In other words, when the content of the low-acid value polyester resin having an acid value of less than 5 mgKOH/g is 50% by mass or more in the entire polyester resin, sufficient curability may not be imparted.

Further, as the polyester resin to be used as the base resin (main component), it is preferable to use a mixed polyester resin obtained by mixing a polyester resin (α) and a polyester resin (β) in order to achieve both of workability and curability of the coating at a higher level. Here, the polyester resin (β) has an acid value higher than that of the polyester resin (α) by at least 5 mgKOH/g.

The polyester resin (α) has a relatively low acid value, that is, it contains a relatively small amount of carboxyl groups that serve as points for reaction with the curing agent (β-hydroxyalkylamide compound or the like). When this polyester resin (α) is used alone as a main component, the crosslinking point density is decreased lower so that a coating excellent in workability may easily be formed. However, due to the small number of reaction points, the crosslinking reaction may take longer time. As a result, baking requires a longer time for achieving a curing degree of high level, in other words, the curability tends to be inferior. On the other hand, the polyester resin (β) has a relatively high acid value, that is, it contains a relatively larger amount of carboxyl groups. When the polyester resin (β) is used alone as a main component, a sufficient curing degree can be easily obtained in a short time, and the curability is excellent. However, the obtained coating tends to have a high crosslinking point density and have inferior workability.

When the mixed polyester resin obtained by mixing the polyester resin (α) and the polyester resin (β) is used, the curability of the entire coating is remarkably improved as compared with a case where the polyester resin (α) is used alone, while the workability may comparatively rely on the characteristics of the polyester resin (α). Namely, excellent workability can be exhibited. As a result, unlike the case of using only one kind of polyester resin, both the curability and workability of higher levels can be achieved.

Here, the difference in the acid value between the polyester resin (α) and the polyester resin (β) is not less than 5 mgKOH/g as mentioned above, and preferably in the range of 10 to 30 mgKOH/g. When the difference in the acid value is less than 5 mgKOH/g, it may be difficult to obtain any effects by combining polyester resins having acid values different from each other.

For efficiently achieving the aforementioned effects, it is preferable to use the polyester resin (α) and the polyester resin (β) having acid values different from each other by at least 5 mgKOH/g. Under the condition, the polyester resin (α) has an acid value higher than 5 mgKOH/g and not higher than 20 mgKOH/g, and particularly higher than 5 mgKOH/g and not higher than 15 mgKOH/g. The polyester resin (β) has an acid value higher than 12 mgKOH/g and lower than 50 mgKOH/g, and particularly in a range of 15 to 45 mgKOH/g. Preferably, the polyester resin (α) and the polyester resin (β) are mixed such that (α): (β) is in a range of 95:5 to 5:95, and particularly 90:10 to 10:90 (mass ratio).

In the present invention, it is preferable that the acid value (Avₘᵢₓ) of the mixed polyester resin formed by mixing the polyester resins (α) and (β), which is represented by the following Equation (2), is in the range of 10 to 40 mgKOH/g, preferably not less than 10 mgKOH/g and less than 30 mgKOH/g. ${Av}_{mix} = {Av}_{α} ⋅ {W}_{α} + {Av}_{β} ⋅ {W}_{β}$ (2)

In this Equation, Avₘᵢₓ represents the acid value (mgKOH/g) of the mixed polyester resin; Av_{α} and Av_{β} represent the acid values (mgKOH/g) of the polyester resin (α) and the polyester resin (β) to be used; and W_{α} and W_{β} represent the mass fractions of the polyester resin (α) and the polyester resin (β).

It is desirable that the polyester resin used in the present invention is an acrylic unmodified polyester resin that has the aforementioned acid value and glass transition temperature and that is not modified with an acrylic resin.

As for the polyester-based aqueous coating composition, it has been widely proposed to use an acrylic-modified polyester resin. This resin is modified with an acrylic resin by a method such as graft polymerization of a polymerizable unsaturated monomer onto a polyester resin. However, a polyester resin modified with an acrylic resin tends to be inferior in workability of a coating to be formed. Further, the modification may increase the number of steps for production and also increase the production cost. In light of this, the polyester resin to be used in the present invention is preferably a polyester resin that is not modified with an acrylic resin (acrylic unmodified polyester resin). In a case of using an acrylic modified polyester resin, the content (mass ratio) of the acrylic resin component (polymer component in the polymerizable unsaturated monomer) in the entire acrylic modified polyester resin is less than 10% by mass, preferably less than 5% by mass.

From the viewpoint of can-making workability, the polyester resin used in the present invention suitably has the glass transition temperature and acid value in the aforementioned ranges and it is an acrylic unmodified resin. Any well-known water-dispersible and/or water-soluble polyester resin to be used for coating compositions can be used in the present invention as long as the resin satisfies the aforementioned conditions.

The water-dispersible polyester resin and the water-soluble polyester resin are polyester resins containing hydrophilic groups as their components. These components may be physically adsorbed on the surface of the polyester dispersed elements, but particularly preferably, they are copolymerized in the polyester resin skeleton.

Examples of the hydrophilic group include a hydroxyl group, an amino group, a carboxyl group, a sulfonic acid group, or a derivative thereof, a metal salt, and ether. A polyester resin containing these groups in the molecules can be present in a state dispersible in water.

Specific examples of the component containing the hydrophilic group include: carboxylic anhydrides such as phthalic anhydride, succinic anhydride, maleic anhydride, trimeric anhydride, itaconic anhydride, and citraconic anhydride; hydroxyl group-containing polyether monomers such as polyethylene glycol, polypropylene glycol, glycerin, and polyglycerin; and metal salts or ammonium salts of sulfonic acid-containing monomers such as 5-sulfoisophthalic acid, and 4-sulfonaphthalene-2,7-dicarboxylic acid.

An example of the polyester resin suitably used in the present invention is a carboxyl group-containing polyester resin having a carboxyl group as a hydrophilic group.

There is no particular limitation for the monomer component to form the polyester resin in combination with a monomer containing the hydrophilic group, as long as the monomer is the one usually used in polymerization of a polyester resin. Examples of polyvalent carboxylic acid component to constitute the polyester resin include: aromatic dicarboxylic acids such as terephthalic acid, isophthalic acid, orthophthalic acid and naphthalenedicarboxylic acid; aliphatic dicarboxylic acids such as succinic acid, glutaric acid, adipic acid, azelaic acid, sebacic acid, dodecanedionic acid, and dimer acid; unsaturated dicarboxylic acids such as (anhydrous) maleic acid, fumaric acid, and terpene-maleic acid adducts; alicyclic dicarboxylic acids such as 1,4-cyclohexanedicarboxylic acid, tetrahydrophthalic acid, hexahydroisophthalic acid, and 1,2-cyclohexenedicarboxylic acid; and trivalent or higher valent carboxylic acids such as (anhydrous) trimellitic acid, (anhydrous) pyromellitic acid, and methylcyclohexenetricarboxylic acid. Among them, one or plural kinds of monomers can be selected to be used.

In the present invention, the percentage of the aromatic dicarboxylic acid such as terephthalic acid, isophthalic acid and naphthalenedicarboxylic acid in the polyvalent carboxylic acid component constituting the polyester resin is preferably not less than 60 mol% and particularly preferably not less than 80%, from the viewpoint of corrosion resistance, retort resistance, flavor retention and the like.

Examples of the polyvalent alcohol component for constituting the polyester resin include: aliphatic glycols such as ethylene glycol, propylene glycol(1,2-propanediol), 1,3-proanediol, 1,4-butanediol, 1,2-butanediol, 1,3-butanediol, 2-methyl-1,3-propanediol, neopentylglycol, 1,5-pentanediol, 1,6-hexanediol, 3-methyl-1,5-pentanediol, 2-ethyl-2-butyl-1,3-propanediol, 2,4-diethyl-1,5-pentanediol, 1-methyl-1,8-octanediol, 3-methyl-1,6-hexanediol, 4-methyl-1,7-heptanediol, 4-methyl-1,8-octanediol, 4-propyl-1,8-octanediol, and 1,9-nonanediol; ether glycols such as diethylene glycol, triethylene glycol, polyethylene glycol, polypropylene glycol and polytetramethylene glycol; alicyclic polyalcohols such as 1,4-cyclohexanedimethanol, 1,3-cyclohexanedimethanol, 1,2-cyclohexanedimethanol, tricyclodecaneglycols, and water-added bisphenols; and trivalent or higher polyalcohols such as trimethylolpropane, trimethylolethane, and pentaerythritol. Each of the components can be used singly or in combination with at least one of the other components.

Among these polyhydric alcohol components, ethylene glycol, propylene glycol, 1,4-butanediol, 1,4-cyclohexanedimethanol, or 2-methyl-1,3-propanediol can be suitably used as a component for constituting the polyester resin in the present invention.

The polyester resin can be produced by any known method such as polycondensation of at least one of these polyvalent carboxylic acid components and at least one of the polyhydric alcohol components. Another method is depolymerization with a polyvalent carboxylic acid component such as terephthalic acid, isophthalic acid, trimellitic anhydride, trimellitic acid or pyromellitic acid after the polycondensation, or ring-opening addition of an acid anhydride such as phthalic anhydride, maleic anhydride, trimellitic anhydride or ethylene glycol bistrimellitate dianhydride after the polycondensation.

The number average molecular weight (Mn) of the polyester resin is preferably in the range of 1,000 to 100,000, particularly 3,000 to 50,000, though the present invention is not limited to this range. When the number average molecular weight is smaller than this range, the coating may become brittle and inferior in workability; when it is larger than this range, stability of the coating material may deteriorate.

The average dispersed particle size of the polyester resin in the coating composition is in the range of 10 to 1,000 nm, and particularly preferably 20 to 500 nm.

The hydroxyl value of the polyester resin is preferably not more than 20 mgKOH/g, more preferably not more than 10 mgKOH/g, though the present invention is not limited thereto. When the β-hydroxyalkylamide compound is used as the curing agent, most of the hydroxyl groups in the polyester resin remain unreacted in the coating, because the β-hydroxyalkylamide compound is considered to react with the carboxyl groups in the polyester resin but hardly or never react with the hydroxyl groups. As a result, when the hydroxyl group value is larger than the range, more hydroxyl groups may remain, which may degrade the corrosion resistance.

### (Curing agent)

The coated metal sheet for use in producing the drawn-ironed can of the present invention is characterized in that a curing agent formed from a β-hydroxyalkylamide compound having a β-hydroxyalkylamide group as a functional group capable of crosslink-reacting with the carboxyl group of the polyester resin as the main component is used.

Amino resins such as a resol-type phenol resin or a melamine resin are usually used as the curing agent for a polyester-based coating composition. Unlike these resins, the curing agent formed from the β-hydroxyalkylamide compound hardly or never undergoes a self-condensation reaction between curing agents, and thus, there may be no risk of workability degradation caused by the self-condensation reaction between the curing agents. Since the reaction points (functional group) of the curing agent may not be consumed by the self-condensation reaction, a minimum amount of the curing agent can efficiently impart sufficient curability, and the amount of the curing agent in the coating can be reduced. As a result, a coating excellent in elongation, workability, corrosion resistance, impact resistance and the like can be obtained. Furthermore, colorless and transparent coating can be formed without coloration unlike the case where a phenol resin is used. Another advantage from the viewpoint of flavor retention or the like is that no formaldehyde is used as a material.

Examples of the curing agent formed from the β-hydroxyalkylamide compound include the component represented by the following General Formula [I].

General Formula [I] [HO-CH (R₁)-CH₂-N(R₂)-CO-]ₘ-A-[-CO-N(R₂')-CH₂-CH(R₁')-OH]ₙ

In the formula, R₁ and R₁' each represents a hydrogen atom or an alkyl group with 1-5 carbon atoms; R₂ and R₂' each represents a hydrogen atom or an alkyl group with 1-5 carbon atoms, or a component represented by General Formula [II] below; "A" represents a polyvalent organic group; m represents 1 or 2; and n represents 0 to 2 (the sum of m and n is at least 2).

General formula [II] HO-CH(R₃)-CH₂-

In the formula, R₃ represents a hydrogen atom or an alkyl group with 1-5 carbon atoms.

The "A" in the General Formula [I] is preferably an aliphatic, alicyclic or aromatic hydrocarbon. More preferably, it is an aliphatic, alicyclic or aromatic hydrocarbon with 2-20 carbon atoms, and still more preferably, an aliphatic hydrocarbon with 4-10 carbon atoms.

The sum of m and n in the General Formula [I] is preferably 2, 3, or 4.

Further, the functional group equivalent in the β-hydroxyalkylamide compound is preferably in the range of 30 to 500 g/eq, and particularly preferably in the range of 40 to 200 g/eq. In this specification, the functional group equivalent denotes a value obtained by dividing the molecular weight by the number of functional groups per molecule of the curing agent (here, the functional group refers to a functional group capable of crosslink-reacting with the carboxyl group of the polyester resin as the base resin). Namely, it means a molecular weight per functional group of the curing agent. When the functional group equivalent is smaller than the range, the distance between the crosslinking points cannot be set long, so that the flexibility of the coating may be lowered and the workability may be degraded. On the other hand, when the same equivalent exceeds the range, the curability may be insufficient.

It is further preferable that the average molecular weight of the curing agent is 1000 or less. When the average molecular weight exceeds the range, compatibility with respect to the polyester resin as the base resin may deteriorate, and it may degrade the reactivity. More preferably, the number of functional groups per molecule of the curing agent is 3 or more, so that favorable curability can be obtained.

Among the components that can be represented by the General Formula [I], particularly preferred examples of β-hydroxyalkylamide compound to be used as the curing agent include: N,N,N',N'-tetrakis(2-hydroxyethyl)adipoamide (CAS: 6334-25-4, product example: Primid XL552 manufactured by EMS-GRILTECH Co., Ltd.), and N,N,N',N'-tetrakis(2-hydroxypropyl)adipoamide (CAS: 57843-53-5, product example: Primid QM1260 manufactured by EMS-GRILTECH Co., Ltd.). Among them, the N,N,N',N'-tetrakis(2-hydroxypropyl)adipoamide is preferred from the viewpoint of curability and retort resistance, since it has higher reactivity with the polyester resin and superior curability in comparison with the N,N,N',N'-tetrakis(2-hydroxyethyl)adipoamide. Furthermore, the N,N,N',N'-tetrakis(2-hydroxypropyl)adipoamide can form a denser crosslinked structure so that the coating may be hardly whitened during a retort treatment, thereby enabling formation of a coating with excellent retort resistance.

The curing agent is preferably blended in an amount of 1 to 15 parts by mass, more preferably 2 to 10 parts by mass, and still more preferably 3 to 8 parts by mass with respect to 100 parts by mass of the polyester resin (solid content). When the blend amount of the curing agent is smaller than this range, sufficient curability cannot be obtained. When the blend amount of the curing agent is larger than this range, another problem can occur. That is, when the functional group of the curing agent becomes extremely large with respect to the carboxyl group amount of the polyester resin, it will be difficult for each molecule of the curing agent to react with two or more molecules of the polyester resin. This may cause defects in crosslink formation and the curability may deteriorate. In addition, stability in long-term storage may deteriorate.

It is also desirable that the equivalent ratio of the hydroxyl group derived from the β-hydroxyalkylamide group of the curing agent to the carboxyl group of the polyester resin (molar ratio of OH group / COOH group) is in the range of 0.3 to 3.0, preferably 0.5 to 2.5, and more preferably 0.8 to 2.0.

### (Coating composition)

The coating on the coated metal sheet for use in producing the drawn-ironed can of the present invention, which has the aforementioned properties, can be formed from an aqueous coating composition containing a polyester resin as a main component and a β-hydroxyalkylamide compound as a curing agent. In the present invention, the component defined as the main component is the component of the highest content (mass ratio) among the solid components (nonvolatile components excluding volatile substances such as water and a solvent) for forming the coating in the aqueous coating composition.

### (Aqueous medium)

The aqueous coating composition contains an aqueous medium together with the polyester resin and the curing agent.

For the aqueous medium, water or a mixture of water and an organic solvent such as an alcohol or a polyhydric alcohol, or a derivative thereof can be used, similarly in a case of preparing a well-known aqueous coating composition. In a case of using the organic solvent, the solvent is contained preferably in an amount of 1 to 45% by mass, particularly preferably 5 to 30% by mass relative to the entire aqueous medium in the aqueous coating composition. The film formation performance can be improved by containing the solvent in this range.

The organic solvent preferably possesses amphiphilicity. The examples include: methyl alcohol, ethyl alcohol, isopropyl alcohol, n-butanol, ethylene glycol, methyl ethyl ketone, butyl cellosolve, carbitol, butyl carbitol, propylene glycol monopropyl ether, propylene glycol ethylene glycol monobutyl ether, propylene glycol monomethyl ether, propylene glycol monobutyl ether, dipropylene glycol monomethyl ether, dipropylene glycol monobutyl ether, tripropylene glycol monomethyl ether, and 3-methyl3-methoxybutanol.

### (Basic compound)

The coating composition preferably contains a basic compound capable of neutralizing the carboxyl group in the polyester resin so that water dispersibility or water solubility can be imparted to the polyester resin. The basic compound is preferably a compound that can volatilize by baking in formation of the coating, and the examples include ammonia and/or an organic amine compound having a boiling point of not higher than 250°C.

Specific examples that can be used here include: alkylamines such as trimethylamine, triethylamine, and n-butylamine; and alcoholic amines such as 2-dimethylaminoethanol, diethanolamine, triethanolamine, aminomethylpropanol, and dimethylaminomethylpropanol. Polyvalent amines such as ethylenediamine or diethylenetriamine can also be used. Amines having branched alkyl groups or heterocyclic amines are also suitably used. As the amine having a branched alkyl group, a branched chain alkylamine with 3-6 carbon atoms, particularly, a branched chain alkylamine with 3-4 carbon atoms can be used, and the examples include isopropylamine, sec-butylamine, tert-butylamine, and isoamylamine. As the heterocyclic amine, a saturated heterocyclic amine containing one nitrogen atom can be used, and the examples include pyrrolidine, piperidine, and morpholine.

Among the aforementioned examples, triethylamine or 2-dimethylaminoethanol can be suitably used in the present invention. The use amount is preferably in the range of 0.5 to 1.5 equivalents relative to the carboxyl group.

### (Lubricant)

The coating composition may contain a lubricant if necessary. It is preferable to add 0.1 to 10 parts by mass of the lubricant to 100 parts by mass of the polyester resin.

Addition of the lubricant serves to prevent scratches on the coating during the working for formation, and improve the slidability of the coating during the working for formation.

Examples of the lubricant that can be added to the coating composition include: a fatty acid ester wax as an esterified product of a polyol compound and a fatty acid, a silicon-based wax, a fluorine-based wax such as polytetrafluoroethylene, a polyolefin wax such as polyethylene, a paraffin wax, lanolin, montan wax, microcrystalline wax, carnauba wax, a silicon-based compound, and petrolatum. Each of these lubricants can be used singly or as a mixture of at least two thereof.

### (Others)

The coating composition can contain further any components to be blended in a conventional coating composition in accordance with a conventional and well-known formulation, and the examples include a leveling agent, a pigment, and a defoaming agent.

The polyester resin can be contained with any other resin components in a range not to hinder the object of the present invention. The examples may include water-dispersible or water-soluble resins such as polyvinyl acetate, ethylene-vinyl acetate copolymer, polyolefin-based resin, epoxy resin, polyurethane resin, acrylic resin, phenol resin, melamine resin, polyvinyl chloride-based resin, polyvinyl chloride-vinyl acetate copolymer resin, polyvinyl alcohol, ethylene·vinyl alcohol copolymer, polyvinyl pyrrolidone, polyvinyl ethyl ether, polyacrylamide, acrylamide-based compound, polyethyleneimine, starch, gum arabic, and methylcellulose.

In the coating composition, the polyester resin as a solid content is suitably contained in an amount of 5 to 55% by mass. When the resin solid content is smaller than the range, an appropriate coating amount cannot be provided reliably, so that the coatability may deteriorate. When the resin solid content is larger than the range, workability and coating applicability may deteriorate.

### (Method for producing coated metal sheet)

In the present disclosure, the aforementioned coating composition is coated on at least one surface of a metal sheet, and then, heated for 5 to 60 seconds at a temperature higher than 200°C and not higher than 320°C, thereby producing a coated metal sheet provided with a coating having a MEK extraction rate in the range of 14 to 50%.

The coating method can be selected from well-known methods such as roll coater coating, spray coating, and dip coating. The composition is coated on at least one surface of the metal sheet that makes the can inner surface, suitably on the both surfaces, and later baked by a heater such as a coil oven.

The conditions for baking the coating composition is appropriately adjusted according to the type and blend ratio of the polyester resin and the curing agent, the type of the metal substrate, the coating amount and the like. In order to set the MEK extraction rate of the baked coating within the aforementioned range, curing with heat is conducted preferably under conditions of the baking temperature higher than 200°C and not higher than 320°C, preferably in a range of 230°C to 300°C, for 5 to 60 seconds, preferably 5 to 45 seconds. The temperature here means the ambient temperature at the time of baking (furnace temperature of the oven).

When the baking temperature is lower than the range, sufficient curing degree may not be achieved. When the baking temperature is higher than the range, the polyester resin may be thermally decomposed due to excessive heating. When the baking time is shorter than the range, sufficient curing degree may not be achieved. And, when the baking time is longer than the range, the economic efficiency and productivity may deteriorate.

Examples of metal sheets to be used for the coated metal sheets include a hot-rolled steel sheet, a cold-rolled steel sheet, a hot dip galvanized steel sheet, an electrogalvanized steel sheet, an alloy-plated steel sheet, an aluminum-zinc alloy-plated steel sheet, an aluminum sheet, a tin-plated steel sheet, a stainless steel sheet, a copper sheet, a copper-plated steel sheet, a tin-free steel sheet, a nickel-plated steel sheet, an ultra-thin tin-plated steel sheet, and a chromium-treated steel sheet, though the present invention is not limited to these examples. The metal sheet to be used can be subjected to a surface treatment as required. Examples of the surface treatment include chemical conversion treatments using phosphate chromate, zirconium or the like and coating-type treatments using a combination of a water-soluble resin such as polyacrylic acid and a zirconium salt such as ammonium zirconium carbonate.

Among the aforementioned metal sheets, aluminum sheets, specifically aluminum alloy sheets of the 3000 series, 5000 series, and 6000 series according to "JIS H 4000" can be used suitably in the present invention. The thickness of the metal sheet may be in the range of 0.1 to 1.00 mm from the viewpoint of can body strength and formability.

It is also possible to form an organic resin coated metal sheet by further laminating a thermoplastic resin film such as a polyester resin film as an organic resin coating layer on the coating of the aforementioned coated metal sheet.

### (Drawn-ironed can)

The drawn-ironed can of the present invention can be produced by a conventionally-known method as long as the aforementioned coated metal sheet is used. Since the coating on the coated metal sheet for use in producing the drawn-ironed can of the present invention has excellent elongation, workability and adhesion, body rupture or delamination of the coating at the mouth of the can may not occur during the severe drawing-ironing in formation of a drawn-ironed can. Since the coated metal sheet for use in producing the drawn-ironed can of the present invention is excellent in formability and lubricity, it can be shaped to make a drawn-ironed can by use of a liquid coolant. Such a drawn-ironed can can be formed even under dry conditions, without use of a liquid coolant.

Prior to the drawing-ironing, the surface of the coated metal sheet is preferably applied with a wax-based lubricant such as a paraffin-based wax, a white petrolatum, a palm oil, various natural waxes or a polyethylene wax, thereby enabling efficient drawing-ironing under the dry conditions. A coated metal sheet applied with the wax-based lubricant is blanked with a cupping press, which is then drawn to form a drawn cup. In the present invention, it is desirable that the drawing ratio RD defined by the Equation (3) below is within the range of 1.1 to 2.6, particularly 1.4 to 2.6 in total (up to a drawn-ironed can). When the drawing ratio is larger than the range, the drawing wrinkles grow to cause cracks on the coating, resulting in metal exposure.$RD = D / d$ (3)

In the equation, D represents a blank diameter and d represents the can body diameter.

Next, the drawn cup is redrawn-ironed. Here, the ironing may be conducted at one stage or several stages. During this working in the present invention, preferably the temperature is controlled so that the temperature of the shaping punch is kept within the range of 20 to 80°C.

In the present invention, it is desirable that the ironing rate R represented by the following Equation (4) is in the range of 25 to 80%, particularly 40 to 70%. When the ironing rate is lower than the range, the thickness cannot be decreased sufficiently, and the economic efficiency may be unsatisfactory. When the ironing rate is higher than the range, metal exposure may occur.$R \left(%\right) = \left(tb-tw\right) / tb \times 100$ (4)

In the equation, tb indicates the thickness of the original coated metal sheet, and tw indicates the thickness of the central portion of the can body side wall of the drawn-ironed can.

In the drawn-ironed can of the present invention, it is preferable that the thickness of the central portion of the can body side wall is 20 to 75%, and preferably 30 to 60% of the thickness of the can bottom (the central portion).

The present invention provides a method for producing a drawn-ironed can by drawing and ironing the coated metal sheet to form a drawn-ironed can, and treating the can with heat. The coating has a MEK extraction rate of less than 14%.

The drawn-ironed can provided in the aforementioned manner is later subjected to at least one stage of heat treatment, so that the polyester resin and the functional groups of the curing agent remaining unreacted in the coating are made crosslink-react with each other. As a result, the curing degree of the final coating is increased, namely, the MEK extraction rate is decreased to provide a coating having superior corrosion resistance, retort resistance, and the like. This heat treatment may be conducted for another purpose, such as removing residual strain on the coating due to the working, or drying and curing a printing ink printed on the surface. The heat treatment is preferably conducted at a temperature in the range of 150 to 250°C for 20 to 180 seconds.

After the heat treatment, the can is quenched or allowed to cool, and as required, it is subjected to at least one stage of neck-in working, and a flange working, thereby providing a can to be double-seamed. Alternatively, the upper part of the thus formed drawn-ironed can is deformed to a bottle. Or the bottom portion is cut off and another can end is attached thereto for forming a bottle.

Since the coated metal sheet for use in producing the drawn-ironed can of the present invention has excellent can-making workability, it can withstand severe working for producing a drawn-ironed can, and thus, it can be formed as a drawn-ironed can excellent in corrosion resistance without metal exposure. In some applications, there may be no necessity of heat treatment (such as dry-curing in printing step) of the drawn-ironed can of the present invention after formation. In such a case, the can is required to have excellent can-making workability, but resistance against delamination of the coating during heat treatment is not necessarily required. In light of this, the coated metal sheet for use in producing the drawn-ironed can of the present invention is required to satisfy the can-making workability, while it may preferably have heat resistance (i.e., no sticking of the coating) and further resistance against delamination of the coating.

### Examples:

Hereinafter, the present invention will be specified with reference to Experimental Examples. Here, the term "part" indicates "part by mass".

The respective measurement items for the polyester resins A-K are described below. The polyester resins A-K are acrylic unmodified polyester resins.

### (Measurement of number average molecular weight)

Solid polyester resins were measured using a calibration curve of standard polystyrene based on gel permeation chromatography (GPC).

### (Measurement of glass transition temperature)

Solid polyester resins were measured using a differential scanning calorimeter (DSC).

### (Measurement of acid value)

1 g of solid polyester resin was dissolved in 10 ml of chloroform, which was titrated with a 0.1 N KOH-ethanol solution to determine its resin acid value (mgKOH/g). Phenolphthalein was used as the indicator. A solvent such as tetrahydrofuran was used for a polyester resin not dissoluble in the chloroform.

### (Measurement of monomer composition)

30 mg of solid polyester resin was dissolved in 0.6 ml of deuterated chloroform, which was subjected to a 1H-NMR measurement, and the monomer composition ratio was determined from the peak intensity. The composition ratio was determined except for trace components (less than 1 mol% based on the total monomer component).

### (Preparation of aqueous coating composition)

### (Production Example 1)

The polyester resin as the main component was polyester resin-A (acid value: 23 mgKOH/g, Tg: 80°C, Mn = 8000, monomer composition: terephthalic acid component / ethylene glycol component / propylene glycol component = 50/10/40 mol%). The β-hydroxyalkylamide compound used as the curing agent was N,N,N',N'-tetrakis(2-hydroxypropyl)adipoamide, which was Primid QM1260 manufactured by EMS-GRILTECH Co., Ltd., and expressed as "β-hydroxyalkylamide-A" in the Table. 333 parts (solid content: 100 parts) of a water dispersion liquid of the polyester resin-A (resin solid content concentration: 30% by mass, isopropyl alcohol concentration: 18% by mass) and 16.7 parts (solid content: 5 parts) of the aqueous solution of the β-hydroxyalkylamide compound (solid content concentration: 30% by mass) adjusted in advance using ion-exchanged water were introduced into a glass container and stirred for 10 minutes to obtain an aqueous coating composition having a solid content concentration of 30% by mass and a solid content blend ratio of polyester resin / curing agent of 100/5 (mass ratio).

### (Production Examples 2 to 4)

Aqueous coating compositions were prepared as shown in Table 1 in the same manner as in Production Example 1 except that the polyester resin was replaced by polyester resin-B (Tg: 67°C, Mn = 9000, acid value: 18 mgKOH/g, monomer composition: terephthalic acid component / isophthalic acid component / ethylene glycol component / neopentyl glycol component = 36/14/24/26 mol%), polyester resin-C (Tg: 40°C, Mn = 9000, acid value: 17 mgKOH/g, monomer composition: terephthalic acid component / isophthalic acid component / adipic acid component / ethylene glycol component / neopentyl glycol component = 28/15/7/25/25 mol%), or polyester resin-E (Tg: 40°C, Mn = 6000, acid value: 29 mgKOH/g).

### (Production Example 5)

An aqueous coating composition was prepared in the same manner as in Production Example 1 except that the polyester resin used here was a mixture of polyester resin-A and polyester resin-H (Tg: -25°C, Mn = 17,000, acid value: 11 mgKOH/g, monomer composition: terephthalic acid component / isophthalic acid component / sebacic acid component / 1,4-butanediol component = 14/17/19/50 mol%) mixed to be 90:10 (AVₘᵢₓ: 21.8 mgKOH/g) at mass ratio.

### (Production Examples 6 to 15)

Aqueous coating compositions were prepared in the same manner as in Production Example 5 except that the polyester resins or the solid content blend ratios were determined as shown in Table 1. The polyester resins other than the aforementioned ones are: polyester resin-G (Tg: 8°C, Mn = 19, 000, acid value: 8 mgKOH/g, monomer composition: terephthalic acid component / isophthalic acid component / sebacic acid component / ethylene glycol component / neopentyl glycol component = 30/5/15/22/28 mol%) ; polyester resin-F (Tg: 20°C, Mn = 17,000, acid value: 8 mgKOH/g, monomer composition: terephthalic acid component / isophthalic acid component / sebacic acid component / ethylene glycol component / neopentyl glycol component = 31/7/12/30/20 mol%) ; and polyester resin-D (Tg: 80°C, Mn = 5000, acid value: 36 mg KOH/g). In Production Example 15, N,N,N',N'-tetrakis(2-hydroxyethyl)adipoamide was used as the β-hydroxyalkylamide compound. This is Primid XL-552 manufactured by EMS-GRILTECH Co., Ltd. and denoted as "β-hydroxyalkylamide B" in the Table.

### (Production Examples 16 to 18)

Aqueous coating compositions were prepared in the same manner as in Production Example 1 except that the polyester resins as shown in Table 1 were used, namely, polyester resin-I (Tg: 70°C, Mn = 3,000, acid value: 58 mgKOH/g); polyester resin-J (Tg: 46°C, Mn = 3,000, acid value: 50 mgKOH/g); or polyester resin-K (Tg: 52°C, Mn = 17, 000, acid value: 5 mgKOH/g, monomer composition: terephthalic acid component / isophthalic acid component / adipic acid component / ethylene glycol component / neopentyl glycol component = 23/23/4/24/26 mol%).

### (Production Example 19)

An aqueous coating composition was prepared in the same manner as in Production Example 1 except that the polyester resin used here was polyester resin-L, which was an acrylic modified polyester resin modified with an acrylic resin (Tg: 60°C, acid value: 15 mgKOH/g, content of acrylic resin component: 70% by mass).

### (Production Example 20)

An aqueous coating composition was prepared in the same manner as in Production Example 1 except that the polyester resin used here was polyester resin-M, which was an acrylic modified polyester resin modified with an acrylic resin (Tg: 50°C, acid value: 30 mgKOH/g, content of acrylic resin component: 40% by mass).

### (Production Example 21)

An aqueous coating composition was prepared in the same manner as in Production Example 1 except that the polyester resin used here was a mixture of polyester resin-A and polyester resin-N (Tg: 4°C, Mn = 8000, acid value: less than 3 mgKOH/g), which were mixed at a mass ratio of 50:50.

### (Production Example 22)

An aqueous coating composition (solid content concentration: 30% by mass, solid content blend ratio: polyester resin / curing agent / curing catalyst = 100/15/1) was prepared in a usual manner using the polyester resin-C, a resol-type phenol resin as a curing agent, and dodecylbenzenesulfonic acid (amine neutralized product) as a curing catalyst.

### [Experimental Examples 1 to 25]

Coated metal sheets for the respective Experimental Examples were prepared using the aqueous coating compositions obtained in the respective Production Examples. The same aqueous coating composition was formed for coating the inner surface and the outer surface of each metal sheet. For the metal sheet, chromate phosphoric acid-based surface-treated aluminum sheet (3104 alloy, thickness: 0.28 mm, chromium weight in the surface treatment film: 20 mg/m²) was used. First, the surface to make the outer surface after formation was coated with the aqueous coating composition by use of a bar coater so that the coating thickness after drying and baking would be 3 µm, and dried at 120°C for 60 seconds. Later, the opposite surface to make the inner surface was coated with the aqueous coating composition by use of the bar coater so that the coating thickness after drying and baking would be as indicated in Table 2. The thus coated metal sheet was baked at 250°C (furnace temperature of the oven) for 60 seconds.

### [Experimental Examples 26 to 40]

The aqueous coating compositions were prepared similarly to Production Example 5 except that the type of the polyester resin, the type of the curing agent, or the solid content blend ratio was changed as shown in Table 3.

The thus obtained aqueous coating composition was used to prepare a coated metal sheet. The coatings on the inner surface and the outer surface of the metal sheet were formed using the same aqueous coating composition. The metal sheet used here was a chromate phosphoric acid-based surface-treated aluminum sheet (3104 alloy, thickness: 0.28 mm, chromium weight in the surface treatment film: 20 mg/m²). First, the surface to make the outer surface after formation was coated with the aqueous coating composition by use of the bar coater so that the coating thickness after drying and baking would be 3 µm, and dried at 120°C for 60 seconds. Later, the opposite surface to make the inner surface was coated with the aqueous coating composition by use of the bar coater so that the coating thickness after drying and baking would be as indicated in Table 3, and baked at 250°C (furnace temperature of the oven) for a predetermined time as shown in Table 3.

The performance of the coating obtained from the aqueous coating composition in each Production Example or Experimental Example, and further the coated metal sheet in each of Experimental Examples 1-40 were tested in accordance with the test methods described below. The results are shown in Table 2 and Table 3.

### [Glass transition temperature of coating (coating Tg)]

The aqueous coating composition used in each of Experimental Examples 1-25 was coated with the bar coater on an aluminum foil so that the film thickness would be identical to that of the inner coating on the coated metal sheets in Experimental Examples shown in Table 2, which was baked at 250°C for 60 seconds, thereby forming a coating on the aluminum foil. Next, the aluminum foil with the coating thereon was immersed in a diluted aqueous hydrochloric acid solution to dissolve the aluminum foil, whereby a film-like coating was obtained. The coating was sufficiently washed in diluted water and dried to make a measurement sample. The glass transition temperature of the thus obtained coating was measured using a differential scanning calorimeter (DSC) under the conditions mentioned below. The glass transition temperature of the coating (coating Tg) was determined as the extrapolated glass transition starting temperature. This temperature is indicated by the intersection of the straight line obtained by extending the baseline of the low temperature side toward the high temperature side and the tangent drawn at a point such that the gradient of the curve of the stepwise change portion of the glass transition is maximized, in 2nd-run (temperature rise).
Instrument: DSC6220 manufactured by Seiko Instruments Inc.
Sample volume: 5 mg
Temperature rise rate: 10°C/min
Temperature range:-80 to 200°C (temperature rise, cooling, temperature rise)
Ambient conditions: under nitrogen stream

It is also possible to obtain the measurement sample from a metal sheet having coatings formed on the both surfaces. In this case, the coating on the surface opposite to the surface for measurement is removed, i.e., scraped with a sand paper or the like. Later, the metal substrate (metal sheet) was dissolved in a usual manner, for instance, by immersing the sheet in a diluted aqueous hydrochloric acid solution. Then, a film-like free coating was taken out, washed sufficiently with diluted water and dried to obtain the measurement sample.

### (MEK extraction rate)

Using a bar coater, the aqueous coating composition to be used in each of the Experimental Examples was coated on a chromate phosphoric acid-based surface-treated aluminum sheet (3104 alloy, thickness: 0.28 mm, chromium weight in the surface treatment film: 20 mg/m²) so that the coating would have the same thickness as that of the inner coating of the coated metal sheet in each of the Experimental Examples shown in Table 2 and Table 3. This was baked at 250°C (furnace temperature of oven) for the time period identical to that for baking the inner coatings of the coated metal sheets in the respective Experimental Examples. In this manner, the coated metal sheet was produced. A test piece of 5cm × 5cm was cut out from the coated metal sheet. After measuring the mass (W1), the test piece was immersed in 200 ml of boiling MEK (methyl ethyl ketone) for 1 hour under 80°C reflux so as to conduct a one-hour MEK extraction at the boiling point. After the extraction, the test piece was washed with MEK, dried at 120°C for one hour and then its mass after extraction (W2) was measured. Further, the coating was delaminated and removed by a decomposition method using concentrated sulfuric acid, washed and dried, and the mass (W3) of the test piece was measured. The MEK extraction rate (% by mass) of the coating of the coated metal sheet can be determined by the following Equation (5). The results are shown in Table 2. $MEK extraction rate \left(%\right) = 100 \times \left(W1-W2\right) / \left(W1-W3\right)$ (5)

As for a coated metal sheet having the coatings on both surfaces thereof, the MEK extraction rate can be measured by the aforementioned method after removing the coating on the surface opposite to the surface to be measured, specifically, for instance, the coating was scraped with a sandpaper.

### (Coating elongation)

Using a bar coater, the aqueous coating composition to be used in each of Experimental Examples 1-23 was coated on an aluminum foil so that the thickness would be identical to that of the inner coating of the coated metal sheet in each of Experimental Examples shown in Table 2. This was baked at 250°C for 60 seconds to form a coating on the aluminum foil. Next, the aluminum foil with the coating was cut out to have a 5 mm width and 30 mm length, immersed in a diluted aqueous hydrochloric acid solution to dissolve the aluminum foil, and then, a film-like free coating was taken out. The coating was washed sufficiently with diluted water and dried to obtain a measurement sample of 5 mm width and 30 mm length. The sample was chucked at a tensile tester, using its hems of 5 mm as grip margins, so that the distance between chucks (original length of the sample) would be 20 mm. A tensile test was conducted under the conditions mentioned below, thereby measuring the elongation of the coating by the time the coating got ruptured at 90°C (rupture elongation). The results are shown in Table 2.
Instrument: Autograph AG-IS manufactured by Shimadzu Corporation
Measurement ambient temperature: 90°C
Tensile rate: 500 mm/min

The elongation can be determined by the following Equation (6). Here, the amount of elongation (elongation length) of the sample to the rupture was substituted by the crosshead movement amount of the testing machine until the rupture. $Elongation \left(%\right) = 100 \times \left(ΔL/{L}_{0}\right)$ (6)
L₀: Original length of sample (mm)
ΔL: Amount of elongation of the sample until rupture (mm)

A sample that did not elongate at all but ruptured was evaluated as "not measurable".

For obtaining a measurement sample from a coated metal sheet having the coating on the both surfaces, the coating on the surface opposite to the measurement surface was removed by scraping, for instance with a sand paper. Later, the coated metal sheet was cut out to have a width of 5 mm and a length of 30 mm, immersed in a diluted hydrochloric acid aqueous solution so that the metal substrate (metal sheet) was dissolved by a usual method. In this manner, a film-like free coating was taken out, washed sufficiently with diluted water and dried to obtain the measurement sample.

### (Evaluation of coating stickiness)

Using a bar coater, the aqueous coating composition used in each of Experimental Examples was coated on a chromate phosphoric acid-based surface-treated aluminum sheet (3104 alloy, thickness: 0.28 mm, chromium weight in the surface treatment film: 20 mg/m²) to have a thickness identical to that of the inner coating of a coated metal sheet in each of Experimental Examples. The sheet was then baked at 250°C for 60 seconds to produce a coated metal sheet. The coated metal sheet was cut out to make a test piece of 2 cm × 5 cm. This test piece was placed on a 6 cm × 6 cm metal sheet (aluminum sheet) so that the coated surface would face the metal sheet, applied with heat and pressure by using a hot press, namely, on a 150°C hot plate at 40 MPa for 1 minute. Later, the metal sheet and the test piece were taken out, allowed to stand to room temperature, and then, the test piece was delaminated off to check the condition.
Instrument: Electric hydraulic heating molding machine manufactured by Imoto Machinery Co., Ltd.

Evaluation criteria are as follows.
⊚: No sticking of coating is found on the metal sheet.
○: A slight sticking of coating is found on the metal sheet.
△: Sticking of coating is found on some parts of the metal sheet.

### (Production of drawn-ironed can)

Coated metal sheets of Experimental Examples were prepared by the aforementioned method. On the both surfaces of each of the coated metal sheets, paraffin wax was applied. Then, the coated metal sheet was punched out to shape a circle with a diameter of 142 mm, thereby forming a shallow-drawn cup. The shallow-drawn cup was then subjected to further working by use of a hydraulic press. Namely, by running a punch at a rate of 1 m/s under dry conditions, the shallow-drawn cup was subjected first to a re-drawing. Next, three steps of ironing were conducted before doming. Here, the punch has an outer diameter of Φ66 mm and equipped with a temperature-regulator. In this manner, a drawn-ironed can having a total drawing ratio of 2.15 and an ironing rate of 64% was obtained. The can height was about 130 mm, the thickness at the central portion of the can body side wall was 38.5% of the thickness at the central portion of the can bottom.

### (Can-making workability evaluation)

For the thus-obtained drawn-ironed can, the coatability (degree of metal exposure) of the inner coating after formation was evaluated by a copper sulfate test. In the test, the can body was filled with a copper sulfate aqueous solution to the height lower by about 10 mm from the flange. Here, the solution was the one prepared by mixing 20 parts of copper (II) sulfate pentahydrate, 70 parts of deionized water, and 10 parts of hydrochloric acid (36%). The can was allowed to stand for about 2 minutes. Then, the copper sulfate aqueous solution was discharged from the can body, and the can body was washed with water and cut open to observe the degree of metal exposure with reference to the degree of precipitation of copper on the inner surface, thereby evaluating the can-making workability.

Evaluation criteria are as follows.
⊚: No metal exposure is found.
○: Metal exposure is found at a limited site of the can body side wall, namely, a site that is worked most severely to decrease the thickness.
△: Metal exposure is found at some sites of the can body side wall, namely, sites that are worked most severely to decrease the thickness.
×: Metal exposure is found in the wide area of the can body side wall.

### (Evaluation of resistance against coating delamination)

The drawn-ironed can obtained in each of the Experimental Examples was subjected to a heat treatment to evaluate the degree of delamination of the inner coating after the heat treatment. Using an oven, the formed can body was heat-treated at 201°C for 75 seconds. After that, the can was cut open to observe and evaluate the degree of delamination of the inner coating.

Evaluation criteria are as follows.
⊚: No delamination of coating is found.
○: Delamination is found at a limited site of the can body side wall, namely, a site that is worked most severely to decrease the thickness.
△: Delamination is found at a site of the can body side wall, namely, a site that is worked severely.

### (MEK extraction rate after heat treatment of drawn-ironed can)

The drawn-ironed can formed of the coated metal sheet in Experimental Example 26 was heat-treated, and then, the MEK extraction rate of the inner coating after the heat treatment was evaluated. Specifically, the formed can body was treated by use of an oven, with heat of 201°C for 75 seconds. Later, a test piece of 5 cm × 5 cm was cut out from the central portion of the can body side wall. After scraping the coating on the outer surface with a sand paper, the test piece was washed and dried. The thus obtained test piece was subjected to a measurement of MEK extraction rate for the coating on the inner surface in a manner similar to the aforementioned measurement of the MEK extraction rate. The result showed that the MEK extraction rate was 12%.

Table 1 shows the composition of the aqueous coating composition (type of polyester resin, type of curing agent, solid content blend ratio, and the like) in each Production Example. Table 2 and Table 3 show the coating conditions (type and composition of aqueous coating composition and coating thickness), the coating performance, and various evaluation results. Here, Table 2 refers to Experimental Examples 1-25 and Table 3 refers to Experimental Examples 26-40, respectively.

As for the coated metal sheets of Experimental Examples 26-40, measurement of elongation of the coating under the conditions of 90°C was not conducted. However, no metal exposure was found in any of these Experimental Examples according to the can-making workability evaluation. This result demonstrates that the elongation of the coatings was apparently 200% or more.

**[Table 1-1]**

| | | | Tg(°C) | Acid value (mgKOH/g) | Mn | Coating material serial number | | | | | | | | | | |
|---|---|---|---|---|---|---|---|---|---|---|---|---|---|---|---|---|
| | | | | | | 1 | 2 | 3 | 4 | 5 | 6 | 7 | 8 | 9 | 10 | 11 |
| | | A | 80 | 23 | 8,000 | 100 | | | | 90 | 80 | 70 | 60 | 50 | 60 | |
| | | B | 67 | 18 | 9,000 | | 100 | | | | | | | | | 60 |
| | | C | 40 | 17 | 9,000 | | | 100 | | | | | | | | |
| | | D | 80 | 36 | 5,000 | | | | | | | | | | | |
| | | E | 40 | 29 | 6,000 | | | | 100 | | | | | | | |
| | | F | 20 | 8 | 17,000 | | | | | | | | | | | 40 |
| Aqueous coating composition | | G | 8 | 8 | 19,000 | | | | | | | | | | 40 | |
| | Polyester resin | H | -25 | 11 | 17,000 | | | | | 10 | 20 | 30 | 40 | 50 | | |
| | | I | 70 | 58 | 3,000 | | | | | | | | | | | |
| Blended composition (Solid content blend ratio) | | J | 46 | 50 | 3,000 | | | | | | | | | | | |
| | | K | 52 | 5 | 17,000 | | | | | | | | | | | |
| | | L | 60 | 15 | - | | | | | | | | | | | |
| | | M | 50 | 30 | - | | | | | | | | | | | |
| | | N | 4 | <3 | 8,000 | | | | | | | | | | | |
| | | Tgₘᵢₓ (°C) | | | | | | | | 65.7 | 52.4 | 40.2 | 28.9 | 18.3 | 47.2 | 46.5 |
| | | AVₘᵢₓ (mgKOH/g) | | | | - | - | - | - | 21.8 | 20.6 | 19.4 | 18.2 | 17.0 | 18.0 | 14.0 |
| | Curing agent | β-hydroxyalkylamide A | | | | 5 | 5 | 5 | 5 | 5 | 5 | 5 | 5 | 5 | 5 | 5 |
| | | β-hydroxyalkylamide B | | | | | | | | | | | | | | |
| | | Phenol resin | | | | | | | | | | | | | | |

**[Table 1-2]**

| | | | Tg(°C) | Acid value (mgKOH/g) | Mn | Coating material serial number | | | | | | | | | | |
|---|---|---|---|---|---|---|---|---|---|---|---|---|---|---|---|---|
| | | | | | | 12 | 13 | 14 | 15 | 16 | 17 | 18 | 19 | 20 | 21 | 22 |
| | | A | 80 | 23 | 8,000 | | 70 | 70 | 70 | | | | | | 50 | |
| | | B | 67 | 18 | 9,000 | | | | | | | | | | | |
| | | C | 40 | 17 | 9,000 | | | | | | | | | | | 100 |
| | | D | 80 | 36 | 5,000 | 90 | | | | | | | | | | |
| | | E | 40 | 29 | 6,000 | | | | | | | | | | | |
| | | F | 20 | 8 | 17,000 | | | | | | | | | | | |
| Aqueous coating composition | Polyester resin | G | 8 | 8 | 19,000 | | | | | | | | | | | |
| | | H | -25 | 11 | 17,000 | 10 | 30 | 30 | 30 | | | | | | | |
| | | I | 70 | 58 | 3,000 | | | | | 100 | | | | | | |
| Blended composition (Solid content blend ratio) | | J | 46 | 50 | 3,000 | | | | | | 100 | | | | | |
| | | K | 52 | 5 | 17,000 | | | | | | | 100 | | | | |
| | | L | 60 | 15 | - | | | | | | | | 100 | | | |
| | | M | 50 | 30 | - | | | | | | | | | 100 | | |
| | | N | 4 | <3 | 8,000 | | | | | | | | | | 50 | |
| | | Tgₘᵢₓ (°C) | | | | 65.7 | 40.2 | 40.2 | 40.2 | | | | | | 37.4 | |
| | | AVₘᵢₓ (mgKOH/G) | | | | 33.5 | 19.4 | 19.4 | 19.4 | - | - | - | - | - | - | - |
| | Curing agent | β-hydroxyalkylamide A | | | | 5 | 3 | 7 | | 5 | 5 | 5 | 5 | 5 | 5 | |
| | | β-hydroxyalkylamide B | | | | | | | 5 | | | | | | | |
| | | Phenol resin | | | | | | | | | | | | | | 15 |

**[Table 2]**

| | No. ²⁾ | Coating performance | | | | Evaluation | | |
|---|---|---|---|---|---|---|---|---|
| | | Thickness (µm) | Coating Tg (°C) | MEK extraction rate (%) | Coating elongation (%) | Coating stickiness | Can-making workability | Resistance against coating delamination |
| Experiment¹⁾ 1 | 1 | 9 | 89 | 7 | 218 | ⊚ | Δ | Δ |
| Experiment 2 | 2 | 9 | 68 | 12 | 360 | ⊚ | ⊚ | Δ |
| Experiment 3 | 3 | 9 | 49 | 16 | 363 | ⊚ | ⊚ | ⊚ |
| Experiment 4 | 4 | 9 | 48 | 24 | 250 | ⊚ | ○ | - |
| Experiment 5 | 5 | 9 | 68 | 10 | 315 | ⊚ | ○ | Δ |
| Experiment 6 | 6 | 9 | 50 | 12 | 355 | ⊚ | ⊚ | Δ |
| Experiment 7 | 7 | 9 | 39 | 18 | 380 | ⊚ | ⊚ | - |
| Experiment 8 | 8 | 9 | 28 | 23 | 410 | ⊚ | ⊚ | ⊚ |
| Experiment 9 | 9 | 9 | 20 | 30 | 490 | ○ | ⊚ | ⊚ |
| Experiment 10 | 10 | 9 | 43 | 12 | 338 | ⊚ | ⊚ | Δ |
| Experiment 11 | 11 | 9 | 41 | 25 | 380 | ⊚ | ⊚ | ⊚ |
| Experiment 12 | 12 | 9 | 74 | 7 | 245 | ⊚ | Δ | Δ |
| Experiment 13 | 13 | 9 | 40 | 25 | 395 | ⊚ | ⊚ | - |
| Experiment 14 | 14 | 9 | 38 | 22 | 450 | ⊚ | ⊚ | - |
| Experiment 15 | 15 | 9 | 40 | 18 | 333 | ⊚ | ⊚ | - |
| Experiment 16 | 10 | 14 | 43 | 13 | 368 | ⊚ | ⊚ | - |
| Experiment 17 | 10 | 6 | 45 | 14 | 325 | ⊚ | ⊚ | - |
| Experiment 18 | 10 | 3 | 42 | 14 | 380 | ⊚ | Δ | - |
| Experiment 19 | 16 | 9 | 67 | 18 | 155 | - | × | - |
| Experiment 20 | 17 | 9 | 45 | 23 | 138 | ○ | × | - |
| Experiment 21 | 18 | 9 | 51 | 55 | >500 | Δ | ⊚ | - |
| Experiment 22 | 19 | 9 | 48 | 34 | 38 | - | × | - |
| Experiment 23 | 20 | 9 | 54 | 11 | Not measurable | - | × | - |
| Experiment 24 | 21 | 9 | 9/43 | 57 | - | - | ⊚ | - |
| Experiment 25 | 22 | 9 | 42 | 8 | - | ⊚ | Δ | - |

| | | | | | | | | |
|---|---|---|---|---|---|---|---|---|
| Experiment¹⁾ : Experimental Example; No.²⁾: Coating material serial number -: Not evaluated | | | | | | | | |

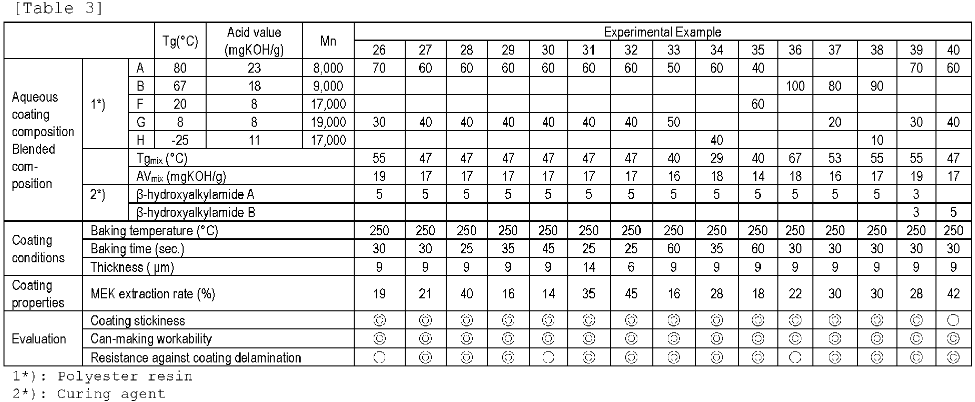

### Industrial Applicability:

The coated metal sheet for use in producing the drawn-ironed can of the present invention is provided with a coating having an elongation and heat resistance in a high temperature range. The sheet is excellent in can-making workability and productivity. Further, since the sheet exhibits excellent resistance against coating delamination to prevent delamination of the coating even in a heat treatment to be conducted after formation, it can be suitably used for production of a drawn-ironed can of the present invention. Since the thus obtained drawn-ironed can is excellent in corrosion resistance or the like, it can be suitably used for a beverage container or the like.

## Claims

1. A drawn-ironed can comprising a coated metal sheet having a coating on at least one surface of a metal sheet, wherein the coating contains a polyester resin as a main component and a β-hydroxyalkylamide compound as a curing agent, and the coating has an elongation, determined in accordance with the method in the description, of not less than 200% under test conditions of 90°C,
further wherein the can has the coating on the inner surface and/or the outer surface at the can bottom portion, and the coating has a MEK extraction rate, determined in accordance with the method in the description, of not more than 50%.

2. A method for producing a drawn-ironed can, comprising:
drawing and ironing a coated metal sheet to form a drawn-ironed can, wherein the coated metal sheet is a coated metal sheet having a coating on at least one surface of a metal sheet, wherein the coating contains a polyester resin as a main component and a β-hydroxyalkylamide compound as a curing agent, and the coating has an elongation, determined in accordance with the method in the description, of not less than 200% under test conditions of 90°C; and
heating the drawn-ironed can to set the MEK extraction rate of the coating, determined in accordance with the method in the description, to be less than 14%.

3. The method for producing a drawn-ironed can according to claim 1, wherein the heating is conducted under conditions of 150 to 250°C and 20 to 180 seconds.

## Patentansprüche

1. Tiefgezogene und abstreckgezogene Dose, die ein beschichtetes Metallblech umfasst, das auf wenigstens einer Oberfläche des Metallblechs eine Beschichtung aufweist, wobei die Beschichtung ein Polyesterharz als Hauptkomponente und eine β-Hydroxyalkylamidverbindung als Härtungsmittel enthält und die Beschichtung eine Dehnung, bestimmt gemäß dem Verfahren in der Beschreibung, von nicht weniger als 200 % unter Prüfbedingungen von 90 °C aufweist,
wobei die Dose ferner die Beschichtung auf der inneren Oberfläche und/oder der äußeren Oberfläche an dem Dosenbodenabschnitt aufweist und die Beschichtung eine MEK-Extraktionsrate, bestimmt gemäß dem Verfahren in der Beschreibung, von nicht mehr als 50 % aufweist.

2. Verfahren zum Herstellen einer tiefgezogenen und abstreckgezogenen Dose, das umfasst:
Tiefziehen und Abstreckziehen eines beschichteten Metallblechs, um eine tiefgezogene und abstreckgezogene Dose auszubilden, wobei das beschichtete Metallblech ein beschichtetes Metallblech ist, das eine Beschichtung auf wenigstens einer Oberfläche eines Metallblechs aufweist, wobei die Beschichtung ein Polyesterharz als Hauptkomponente und eine β-Hydroxyalkylamidverbindung als Härtungsmittel enthält und die Beschichtung eine Dehnung, bestimmt gemäß dem Verfahren in der Beschreibung, von nicht weniger als 200 % unter Prüfbedingungen von 90 °C aufweist,
Erhitzen der tiefgezogenen und abstreckgezogenen Dose, um die MEK-Extraktionsrate der Beschichtung, bestimmt gemäß dem Verfahren in der Beschreibung, auf weniger als 14 % einzustellen.

3. Verfahren zum Herstellen einer tiefgezogenen und abstreckgezogenen Dose nach Anspruch 1, wobei das Erhitzen unter Bedingungen von 150 bis 250 °C und 20 bis 180 Sekunden durchgeführt wird.

## Revendications

1. Boîte emboutie et étirée comprenant une feuille métallique revêtue présentant un revêtement sur au moins une surface d'une feuille métallique, le revêtement contenant une résine polyester comme composant principal et un composé β-hydroxyalkylamide comme agent de durcissement, et le revêtement présentant un allongement, déterminé conformément à la méthode mentionnée dans la description, supérieur ou égal à 200 %, dans des conditions de test de 90 °C,
la boîte présentant en outre le revêtement sur la surface intérieure et/ou la surface extérieur au niveau de la portion inférieure de la boîte, et le revêtement présentant un taux d'extraction de MEK, déterminé conformément à la méthode mentionnée dans la description, inférieur ou égal à 50 %.

2. Procédé de production d'une boîte emboutie et étirée, comprenant :
l'emboutissage et l'étirage d'une feuille métallique revêtue pour former une boîte emboutie et étirée, ladite feuille métallique revêtue étant une feuille métallique revêtue présentant un revêtement sur au moins une surface d'une feuille métallique, ledit revêtement contenant une résine polyester comme composant principal et un composé β-hydroxyalkylamide comme agent de durcissement, et le revêtement présentant un allongement, déterminé conformément à la méthode mentionnée dans la description, supérieur ou égal à 200 %, dans des conditions de test de 90 °C, et
le chauffage de la boîte emboutie et étirée pour régler le taux d'extraction de MEK du revêtement, déterminé conformément à la méthode mentionnée dans la description, à moins de 14 %.

3. Procédé de production d'une boîte emboutie et étirée selon la revendication 1, dans lequel le chauffage est effectué dans les conditions de 150 à 250 °C et 20 à 180 secondes.
